# EUROPÄISCHE PATENTSCHRIFT

(11) **EP 1 188 511 B1**
(45) Veröffentlichungstag und Bekanntmachung des Hinweises auf die Patenterteilung: **24.11.2004**
(21) Anmeldenummer: 01120685.1
(22) Anmeldetag: 03.09.2001
(51) Int. Cl.: B23Q 1/62, B23Q 1/56, B23Q 1/50, B23Q 1/54, B23Q 1/48

(54) **Werkzeugmaschine mit einem motorisch fahrbaren Werkzeugschlitten**
Machine tool with a motor driven tool slide
Machine-outil avec un chariot porte-outil motorisé

(30) Priorität: 13.09.2000 DE 10045176
(43) Veröffentlichungstag der Anmeldung: 20.03.2002
(73) Patentinhaber: DECKEL MAHO Pfronten GmbH, 87459 Pfronten (DE)
(72) Erfinder: Hoppe, Gerd, 34317 Habichtswald (DE); Gronbach, Hans, Dr., 87637 Eisenberg (DE)
(74) Vertreter: Beetz & Partner Patentanwälte

(56) Entgegenhaltungen:
- WO-A-99/08832
- DE-A- 19 924 823
- DE-U- 29 705 152
- DE-U- 29 914 888

## Beschreibung

Die Erfindung betrifft eine Werkzeugmaschine zur spanenden Bearbeitung von Werkstücken der im Oberbegriff des Patentanspruchs 1 angegebenen Gattung.

Bei konventionellen Werkzeugmaschinen wird die zwischen dem Werkzeug und dem Werkstück für eine Mehrachsenbearbeitung erforderliche Relativbewegung üblicherweise durch drei linear zueinander in den Hauptkoordinatenachsen verschiebbare Maschinenteile erreicht. Aus der EP 0 721 819 A1 ist eine Werkzeugmaschine bekannt, bei der eine als Vertikalfräskopf ausgeführte Bearbeitungseinheit über einen Kreuzschlitten in zwei zueinander rechtwinkligen Horizontalachsen verfahrbar an einem Maschinenständer angeordnet ist. Der Kreuzschlitten besteht aus einem über erste Führungsschienen auf dem Maschinenständer verfahrbaren Querschlitten, auf dem ein über zweite Führungsschienen geführter Längsschlitten verschiebbar ist. Für die Verfahrbewegungen in der Vertikalachse ist der Fräskopf über dritte Führungsschienen vertikal verfahrbar am Längsschlitten angeordnet. Bei derart aufgebauten Werkzeugmaschinen werden für jedes der drei in je einer der Hauptkoordinatenachsen verfahrbaren Maschinenteile gesonderte Linearführungen benötigt. Diese sind jedoch konstruktiv aufwendig und erfordern entsprechend hohe Investitions- und Montagekosten. Darüber hinaus sind die in den einzelnen Koordinatenachsen zu bewegenden Massen bei derartigen Maschinen in der Regel relativ groß, wodurch die Verfahrgeschwindigkeit der Bearbeitungseinheit begrenzt wird und die Anforderungen an die Führungen und Antriebe entsprechend hoch sind.

In der DE 198 06 085 A1 ist eine Werkzeugmaschine zur dreiachsigen Bearbeitung von Werkstücken beschrieben, bei der in Führungen an den beiden Längsträgern des rahmenförmigen Maschinengestells je ein Schlitten verfahrbar ist. Ein von Schwenkarmen gebildetes Koppelsystem verbindet jeden der beiden Schlitten mit einer Bearbeitungseinheit, die einen weiteren Schlitten sowie einen damit verfahrbaren Werkzeugträger enthält. Durch gesteuerte Bewegungen der beiden Schlitten auf den Längsholmen kann die Bearbeitungseinheit in eine beliebige Position innerhalb eines quadratischen Bearbeitungsfeldes gebracht werden. Allerdings ergeben sich in bestimmten Positionen der Bearbeitungseinheit extrem hohe Belastungen des Koppelsystems bei entsprechenden Winkelstellungen der Schwenkarme, so daß diese Werkzeugmaschine für hohe Belastungen, z.B. Schrupparbeiten mit hoher Spanleistung, nicht geeignet ist.

Aus der WO99/08832 ist eine gattungsgemäße Werkzeugmaschine für die spanende Fünfachs-Bearbeitung von Werkstücken bekannt, die an der Frontseite des Maschinenständers zwei oder drei nebeneinander angeordnete und einzeln oder gemeinsam in einer Koordinatenachse verfahrbare Schlitten aufweist. Jeder Schlitten trägt an seiner Stirnseite einen vorstehenden Gelenkzapfen an dem jeweils ein Schwenkarm gelagert ist. Die freien Enden dieser Schwenkarme sind über weitere Drehgelenke mit einem Träger der als Fräskopf ausgebildeten Bearbeitungseinheit verbunden. Jeweils zwei dieser Schwenkhebel sind parallel zueinander ausgerichtet und bilden eine Parallelführung für den Fräskopf. Daneben ist in dieser Druckschrift noch ein Maschinentyp beschrieben, bei dem der Fräskopf über zwei am gleichen Drehgelenk angreifende Schwenkhebel und zwei Schlitten am Maschinenständer verfahrbar ist und ein zusätzlicher Schwenkhebel die gelenkige Verbindung zwischen einem zweiten beabstandeten Drehgelenk am Fräskopf und einem auf einer gesonderten Führungsbahn am Maschinenständer verfahrbaren Schlitten herstellt. Durch Verfahren dieses dritten Schlittens kann der Fräskopf aus einer Vertikalstellung über Zwischenstellungen in eine Horizontalstellung geschwenkt werden. Alle aus dieser Druckschrift bekannten Ausführungen haben den Nachteil, daß durch die weit auskragende Anordnung des Werkzeugs erhebliche Kippmomente bei der Bearbeitung entstehen, die über die Gelenke, Schwenkhebel und Schlitten auf die Schlittenführungen übertragen werden und die Stabilität sowie auch die Bearbeitungsgenauigkeit beeinträchtigen. Darüberhinaus ist die Bewegung des Fräskopfes durch die Fahrtrichtung der Schlitten in nur einer Koordinatenachse begrenzt.

Aufgabe der Erfindung ist es, eine Werkzeugmaschine der eingangs genannten Art zu schaffen, die bei stabilem Aufbau mit möglichst wenigen Linearführungen eine schnelle Bearbeitung mit genauer und schneller Positionierung der Bearbeitungseinheit ermöglicht.

Diese Aufgabe wird erfindungsgemäß durch die im Patentanspruch 1 angegebenen Merkmale gelöst.

Das erfindungsgemäße Maschinenkonzept zeichnet sich durch einen konstruktiv einfachen und äußerst steifen Maschinenaufbau aus, der Verfahrbewegungen mit hoher Dynamik und gleichzeitig hoher Genauigkeit ermöglicht. Durch den auf oder am Maschinenständer in einer ersten Koordinatenachse verfahrbaren Querträger und durch einfache Verschiebung der beiden Querschlitten in einer zweiten Koordinatenachse ist über den konstruktiv einfachen Koppelmechanismus mit geringen bewegten Massen eine schnelle und genaue Positionierung der Bearbeitungseinheit im Raum erreichbar. Auch die Querschlitten können leicht und einfach ausgeführt sein, so daß schnelle Bewegungen und große Beschleunigungen möglich sind. Ein weiterer wesentlicher Vorteil der Werkzeugmaschine besteht darin, daß für Verfahrbewegungen in zwei Achsen nur eine Führung erforderlich ist.

Bei einer Werkzeugmaschine in Gantry-Bauweise kann z.B. der Querträger auf zwei Seitenteilen eines Maschinenständers horizontal verfahrbar angeordnet sein. Der Querträger kann aber auch an einer Front- oder Seitenwand eines Maschinenständers vertikal oder auch horizontal verfahrbar geführt sein. Bei beiden Ausführungen ist über den Koppelmechanismus eine schnelle Axialbewegung der Arbeitsspindel oder Arbeitsspindeln erreichbar.

In einer leichten und trotzdem stabilen Ausführung können die Schwenkarme z.B. aus Seitenplatten und Querstreben verschweißte Gelenkträger sein. Die Schwenkarme können aber auch als Stützen oder dgl. mit Kreis- oder Rechteckquerschnitt ausgeführt sein.

Eine weitere vorteilhafte Ausführung zeichnet sich dadurch aus, daß die Länge mindestens des oberen Schwenkarms veränderlich ist. Dies ermöglicht eine Schrägstellung der Bearbeitungseinheit, wodurch z.B. Formschrägen oder dgl. auf einfache Weise bearbeitet werden können. Eine schnelle und zweckmäßige automatische Längenverstellung eines Schwenkarms kann dadurch erreicht werden, daß dieser als Teleskoparm mit gegeneinander verschiebbaren inneren und äußeren Armteilen ausgeführt ist. Die Verschiebung der Armteile kann dabei über Linearantriebe oder andere geeignete Antriebe erfolgen.

Eine weitere Möglichkeit zur Schrägstellung der Bearbeitungseinrichtung besteht darin, daß mindestens einer der beiden Querschlitten ein auf dem Querträger horizontal verschiebbares erstes Schlittenteil und ein auf diesem über Führungsschienen verschiebbar geführtes und motorisch angetriebenes zweites Schlittenteil aufweist, an dem der obere Schwenkarm mit seinem oberen Ende angelenkt ist. Dadurch kann auch ohne längenveränderliche Schwenkarme eine Kipp- oder Schrägstellung der Bearbeitungseinheit erzielt werden.

In einer für die schnelle Bearbeitung kleinerer bis mittlerer Werkstücke besonders zweckmäßigen Ausführung enthält der Werkstückträger eine um eine Vertikalachse motorisch drehbare Tragsäule, an der mehrere in Umfangsrichtung gleichbeabstandete Spannklötze o. ä. um deren horizontale Mittelachse drehbar angeordnet sind. Dadurch werden schnelle Werkstückwechsel ohne längere Stillstandszeiten ermöglicht. Für die Bearbeitung großer und schwerer Werkstücke kann der Werkstückträger aber auch ein starrer oder um eine Vertikalachse drehbarer Rundtisch sein.

Ein schneller Werkzeugwechsel kann in besonders vorteilhafter Weise dadurch erreicht werden, daß eine im hinteren Bereich des Maschinenständers angeordnete Werkzeugspeichereinrichtung mindestens zwei einander gegenüberliegende Werkzeugmagazine enthält. Die Bearbeitungseinheit kann für einen Werkzeugwechsel zwischen die beiden Werkzeugmagazine verfahren werden, wobei dann mit minimalen Verfahrwegen die alten Werkzeuge in ein Magazin abgelegt und die neuen Werkzeuge aus dem gegenüberliegenden Magazin entnommen werden können.

In einer besonders zweckmäßigen Ausführung enthält die Bearbeitungsspindel zwei oder mehrere Arbeitsspindeln. Dadurch können mehrere Werkstücke gleichzeitig bearbeitet werden.

Weitere Besonderheiten und Vorzüge der Erfindung ergeben sich aus der folgenden Beschreibung vorteilhafter Ausführungsbeispiele anhand der Zeichnung. Es zeigen:
- Fig. 1: den Grundaufbau einer erfindungsgemäßen Werkzeugmaschine in schematischer Perspektivansicht;
- Fig. 2: eine schematische Vorderansicht der erfindungsgemäßen Werkzeugmaschine, bei der die Vorderwand des Querträgers und der Werkstückträger weggelassen sind;
- Fig. 3: eine schematische Draufsicht der in Fig. 1 dargestellten Werkzeugmaschine;
- Fig. 4: eine Detailansicht einer weiteren Ausführungsform eines Koppelmechanismus zwischen den Querschlitten und der Bearbeitungseinheit; und
- Fig. 5: eine weitere Ausführungsform der erfindungsgemäßen Werkzeugmaschine.

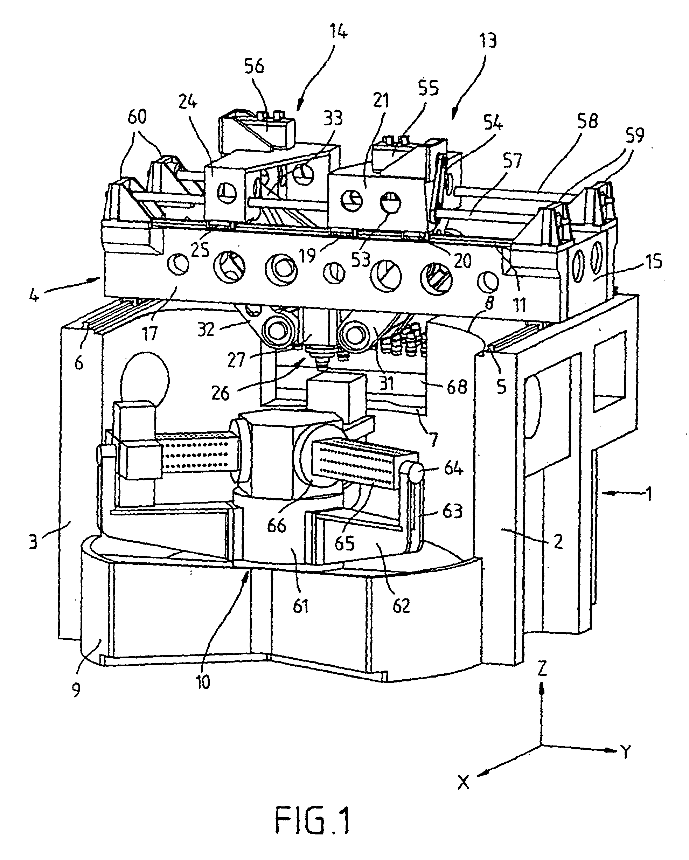

Die in den Fig. 1 bis 3 schematisch dargestellte Werkzeugmaschine enthält einen formsteifen Maschinenständer 1 mit zwei gegenüberliegenden Seitenteilen 2 und 3, auf denen ein Querträger 4 über zwei parallele Führungsschienen 5, 6 durch einen nicht dargestellten Antrieb in einer ersten Bewegungsachse (X-Achse) horizontal verfahrbar angeordnet ist. Die als Seitenwände ausgeführten Seitenteile 2 und 3 des Maschinenständers 1 sind durch eine hintere Querwand 7 fest miteinander verbunden, die bei der gezeigten Ausführung derart ausgebildet ist, daß der Maschinenständer 1 an seiner Vorderseite eine in Draufsicht etwa halbkreisförmige Einbuchtung 8 zwischen den Seitenteilen 2 und 3 aufweist. Innerhalb dieser Einbuchtung 8 ist die in Draufsicht kreisrunde hintere Hälfte einer Basis 9 angeordnet. Von der halbrunden Stirnseite der Querwand 7 wird der über der Basis 9 befindliche Arbeitsbereich der Fräs- und Bohrmaschine nach hinten begrenzt. Auf der mit dem Maschinenständer 1 fest verbundenen oder einteilig mit diesem ausgeführten Basis 9 ist ein im weiteren näher erläuterter Werkstückträger 10 für die Aufnahme der zu bearbeitenden Werkstücke angeordnet. Die Oberseite der Basis 9 ist als Auffangwanne für die bei der Bearbeitung anfallenden Späne und dgl. ausgebildet.

Auf der Oberseite des Querträgers 4 sind zwei zu den Führungsschienen 5 und 6 rechtwinklige horizontale Führungsschienen 11 und 12 montiert, auf denen zwei Querschlitten 13 und 14 in einer zur ersten Bewegungsachse (X-Achse) rechtwinkligen zweiten Bewegungsachse (Y-Achse) horizontal verfahrbar angeordnet sind.

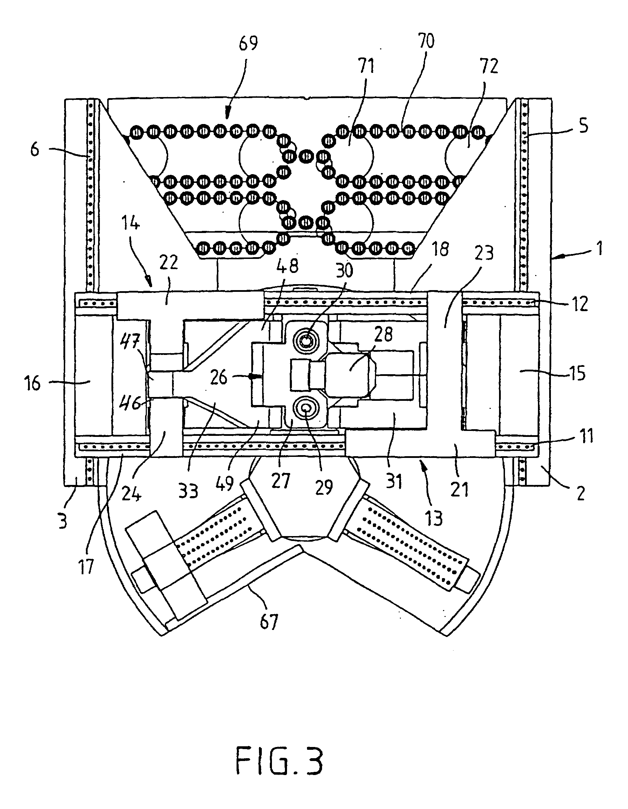

Wie besonders aus Fig. 1 und 3 hervorgeht, ist der Querträger 4 eine formsteife rechteckige Rahmenkonstruktion, bestehend aus zwei kürzeren auf den Führungsschienen 5 und 6 laufenden Seitenhalmen 15, 16 und aus einem längeren vorderen und hinteren Tragholm 17, 18, die mit Durchbrüchen versehen sind. Auf den beiden parallelen voneinander beabstandeten Tragholmen 17 und 18 sind die Führungsschienen 11 und 12 für die Querschlitten 13 und 14 befestigt. Gemäß Fig. 3 bestehen die Querschlitten 13 und 14 jeweils aus einem über zwei Führungselemente 19 und 20 auf einer der Führungsschienen 1 bzw. 12 geführten und in deren Längsrichtung verlaufenden Führungskörper 21 bzw. 22 und aus einem um 90° dazu abgewinkelten, horizontalen Stützkörper 23 bzw. 24, der endseitig über ein einzelnes Führungselement 25 auf der jeweils anderen Führungsschiene 12 bzw. 11 geführt ist. Die beiden Querschlitten 13 und 14 sind so versetzt angeordnet, daß auf einer Führungsschiene jeweils der Führungskörper eines Querschlittens und der Stützkörper des anderen Querschlittens geführt sind. In den Seitenwänden der in Kastenbauweise z.B. als Schweißkonstruktion ausgeführten Querschlitten 13 und 14 sind Durchbrüche vorgesehen, wodurch die zu bewegende Masse verringert wird. An den beiden Stützkörpern 23 und 24 ist eine im Freiraum zwischen den beiden beabstandeten Tragholmen 17 und 18 angeordnete Bearbeitungseinheit 26 mit hier zwei in einem Gehäuse 27 gelagerten und durch zumindest einen Antriebsmotor 28 angetriebenen Arbeitsspindeln 29 und 30 über Schwenkarme 31, 32 und 33 derart angelenkt, daß die Bearbeitungseinheit 26 durch gegensinnige Verschiebung der Querschlitten 13 und 14 in der Y-Z-Ebene bewegbar ist. Durch gleichsinnige Bewegungen beider Querschlitten 13, 14 wird die Bearbeitungseinheit 26 in der Y-Achse verfahren.

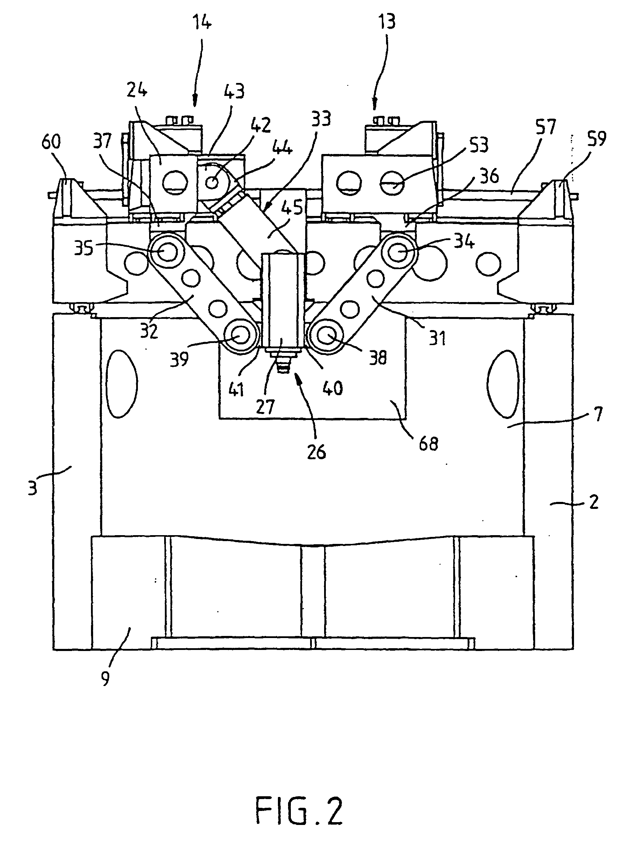

Wie aus Fig. 2 ersichtlich, sind die oberen Enden der beiden unteren Schwenkarme 31 und 32 über Gelenke 34 und 35 an nach unten vorstehenden Teilen 36 und 37 der beiden Stützkörper 23 bzw. 24 angelenkt. Die unteren Enden der Schwenkarme 31 und 32 sind über Gelenke 38 und 39 an zwei seitlichen Ansätzen 40 und 41 des Gehäuses 27 der Bearbeitungseinheit 26 angelenkt. Über dem in Fig. 2 linken unteren Schwenkarm 32 ist ein oberer Schwenkarm 33 angeordnet, der mit seinem oberen Ende über ein Gelenk 42 an einem seitlichen Ansatz 43 des Stützkörpers 24 und mit seinem unteren Ende am oberen Ende des Gehäuses 27 der Bearbeitungseinheit 26 angelenkt ist. Bei der in Fig. 2 dargestellten Ausführung ist der obere Schwenkarm 33 als Teleskoparm mit zwei relativ zueinander verschiebbaren inneren und äußeren Armteilen 44 und 45 ausgeführt. Durch Aus- bzw. Einfahren des äußeren Armteils 45 über einen - nicht dargestellten - geeigneten Linearantrieb o.ä. kann so die Bearbeitungseinheit 26 gekippt und wieder in ihre gezeigte Vertikalstellung bewegt werden.

Der obere Schwenkarm 33 kann aber auch ein starrer Träger mit unveränderlicher Länge sein, wie dies in Fig. 1 und besonders in Fig. 3 gezeigt ist. Bei der dort dargestellten Ausführung ist der z.B. dreiecksförmig ausgebildete obere Schwenkarm 33 mit seinem schmalen oberen Ende 46 in einer mittigen Aussparung 47 in dem Stützkörper 24 und über zwei seitliche untere Schenkel 48 bzw. 49 an der in Fig. 3 linken Seite des Gehäuses 27 angelenkt. Bei dieser Ausführung ist jedoch keine Schrägstellung der Bearbeitungseinheit 26 möglich.

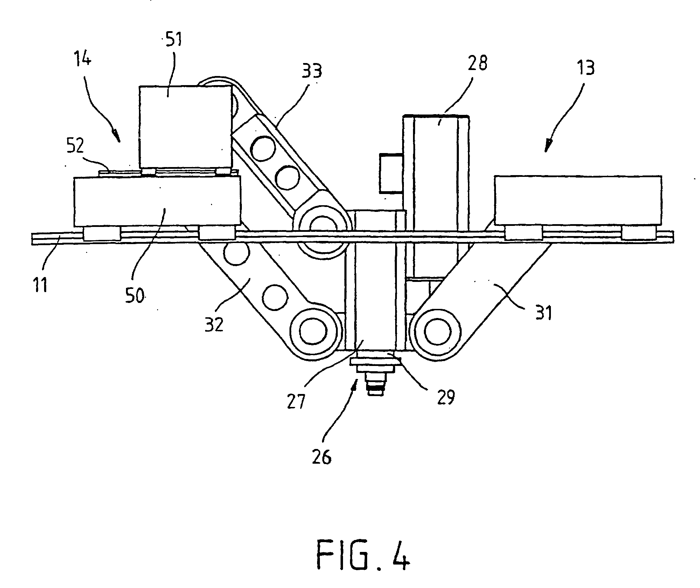

Bei dem als weitere Ausführung in Fig. 4 dargestellten Koppelmechanismus wird eine Schrägstellung der Bearbeitungseinheit 26 dadurch ermöglicht, daß der in dieser Figur linke Querschlitten 14 ein auf dem Querträger 4 über die Führungsschienen 11 und 12 horizontal verschiebbares unteres Schlittenteil 50 und ein auf diesem über Führungsschienen 52 durch einen nicht dargestellten Antrieb motorisch verschiebbar geführtes oberes Schlittenteil 51 aufweist. An dem unteren Schlittenteil 50 ist das obere Ende des Schwenkarms 32 und an dem oberen Schlittenteil 51 das untere Ende des Schwenkarms 33 angelenkt. Durch Verschiebung des oberen Schlittenteils 52 auf dem unteren Schlittenteil 51 kann so eine Schrägstellung der Bearbeitungseinheit 26 erreicht werden.

Bei der dargestellten Werkzeugmaschine erfolgt der Antrieb der beiden Querschlitten 13 und 14 über jeweils einen in Fig. 1 und 2 dargestellten Kugelspindeltrieb, der eine in dem Führungskörper 21 und 22 des jeweiligen Querschlittens 13 bzw. 14 angeordnete Spindelmutter 53 und eine über einen Riementrieb 54 von einem Motor 55 bzw. 56 angetriebene Gewindespindel 57 bzw. 58 enthält. Die Gewindespindeln 57 und 58 sind endseitig über Winkelstützen 59 und 60 auf dem Querträger 4 gelagert, wobei der rechte Querschlitten 13 über die vordere Gewindespindel 57 und der linke Querschlitten 14 über die hintere Gewindespindel 58 angetrieben werden. Die beiden Querschlitten 13 und 14 können aber auch über Linearantriebe oder andere geeignete Antriebe verschoben werden. In der Fig. 3 sind die Antriebe der Querschlitten 13 und 14 zur Vereinfachung weggelassen.

Der in den Fig. 1 und 3 dargestellte Werkstückträger 10 enthält eine vertikale Tragsäule 61, die durch einen nicht dargestellten Antrieb um ihre vertikale Mittelachse verdrehbar etwa im Zentrum der Basis 9 angeordnet ist. An der Tragsäule 61 sind drei in Umfangsrichtung gleichbeabstandete Winkelstützen 62 angeordnet, in deren vertikal nach oben ragenden Endteilen 63 ein endseitiger Lagerzapfen 64 eines qua derförmigen Spannklotzes 65, einer Spannplatte oder dgl. abgestützt ist. Über am anderen Ende der Spannklötze 65 angeordnete Flansche 66 sind die Spannklötze 65 durch einen nicht gezeigten Antrieb um deren horizontale Mittelachse verdrehbar an der Tragsäule 61 angeordnet. An den vier Seitenflächen jedes Spannklotzes 65 können die zu bearbeitenden Werkstücke gespannt werden. Der gemäß Fig. 1 nach hinten ragende Spannklotz 65 befindet sich in einer Bearbeitungsposition, während die beiden schräg nach vorne ragenden Spannklötze in einer Rüstposition sind, so daß dort die neu zu bearbeitenden Werkstücke aufgespannt bzw. bereits fertig bearbeitete Werkstücke abgenommen werden können. Für den besseren Zugang zu den beiden vorderen Spannklötzen 65 weist die Basis 9 eine in Draufsicht kreissegmentförmige Ausnehmung 67 an seiner Vorderseite auf. Außerdem wird die in den Fig. 1 bis 3 dargestellte Werkzeugmaschine zum Schutz der Umgebung von einer nicht gezeigten Schutzkabine umgeben.

Durch Verfahren des Querträgers 4 kann die Bearbeitungseinheit 26 mit den beiden parallelen Arbeitsspindeln 29 und 30 gemäß Fig. 1 in der X-Achse bewegt werden. Bei gleichgerichteter synchroner Verschiebung der beiden Querschlitten 13 und 14 wird die Bearbeitungseinheit in der horizontalen Y-Achse und beim Zusammenoder Auseinanderfahren der Querschlitten 13 und 14 in der vertikalen Z-Achse verstellt. Eine Schrägstellung der Bearbeitungseinheit 26 kann dagegen entweder durch Ausfahren des als Teleskoparm ausgebildeten Schwenkarms 33 oder durch Verschiebung des Schlittenoberteils 51 auf dem Schlittenunterteil 50 erreicht werden.

Der Maschinenständer 1 weist im oberen Bereich der Querwand 7 einen rechteckigen Ausschnitt 68 auf, durch den die Bearbeitungseinheit 26 zu einer dahinterliegenden Werkzeugspeichereinrichtung 69 verfahren werden kann. Wie aus Fig. 3 hervorgeht, besteht die Werkzeugspeichereinrichtung 69 aus vier hinter der Querwand 7 zwischen den beiden Seitenwänden 2 und 3 angeordneten Werkzeugmagazinen 70, wobei jeweils zwei der Werkzeugmagazine einander gegenüberliegend derart angeordnet sind, daß durch minimale seitliche Bewegungen der in einer Zwischenstellung zwischen den Werkzeugmagazinen 70 befindlichen Bearbeitungseinheit 26 gebrauchte Werkzeuge in die auf einer Seite angeordneten Werkzeugmagazine abgelegt und neue Werkzeuge aus den gegenüberliegenden Werkzeugmagazinen entnommen werden können. Bei der gezeigten Ausführung sind die Werkzeugmagazine als Kettenmagazine ausgeführt, die über zwei Antriebsräder oder -scheiben 71, 72 geführt sind. Es sind aber auch Scheibenmagazine oder dgl. möglich.

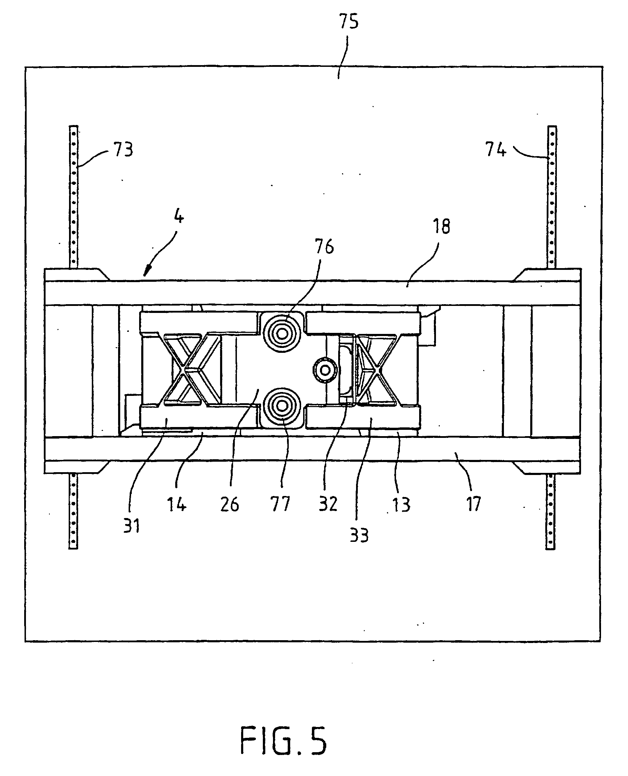

In Fig. 5 ist ein weiteres Ausführungsbeispiel einer erfindungsgemäßen Werkzeug maschine dargestellt. Bei dieser Ausführung ist der Querträger 4 über vertikale Führungsschienen 73 und 74 an einer vertikalen Front- oder Seitenwand 75 eines Maschinenständers in einer Vertikalachse verfahrbar angeordnet. Zwischen den beiden Tragholmen 17 und 18 des Querträgers 4 ist die Bearbeitungseinheit 26 mit zwei horizontalen Arbeitsspindeln 76 und 77 über den Koppelmechanismus mit drei Schwenkarmen 31 bis 33 an den beiden Querschlitten 13 und 14 angelenkt. Wie bei der vorstehend beschriebenen Ausführung sind auch dort die beiden Querschlitten 13 und 14 über geeeignete Antriebe verschiebbar am Querträger 4 angeordnet. Durch entgegegengesetzte synchrone Verschiebung der beiden Querschlitten 13 und 14 kann über den Koppelmechanismus so eine Axialbewegung der beiden Arbeitsspindeln 76 und 77 in Horizontalrichtung realisiert werden. Bei gleichgerichteter synchroner Verschiebung der beiden Querschlitten 13 und 14 können die beiden Arbeitsspindeln 76 und 77 dagegen quer zu ihrer Achsrichtung horizontal bewegt werden.

Die Erfindung ist nicht auf die im einzelnen beschriebenen und in der Zeichnung dargestellten Ausführungsbeispiele beschränkt. So können mehrere Arbeitsspindeln auch in einer Art Rahmen, Schlitten oder dgl. angeordnet sein, so daß deren Zwischenabstand veränderlich bzw. einstellbar ist. Dadurch könnte der Bearbeitungsabstand reguliert und die Einsatzmöglichkeit vergrößert werden. Ferner kann die Bearbeitungseinheit auch um eine Vertikalachse drehbar ausgebildet sein, so daß die Stellung der einzelnen Arbeitsspindeln verändert werden kann. Anstelle der durch einen gemeinsamen Motor angetriebenen Arbeitsspindeln kann auch eine oder mehrere einzeln angetriebene Motorspindeln verwendet werden. Für die Praxis von besonderem Vorteil ist eine Variante, bei der eine oder alle Arbeitsspindeln einer Mehrspindel-Bearbeitungseinheit mit einem Längenausgleich für das jeweilige Werkzeug versehen ist, um geringfügige Längendifferenzen der einzelnen Werkzeuge, verursacht z.B. durch Verschleiß, Nachschleifen oder dgl., auf einfache Weise ohne Zeitverlust ausgleichen zu können. Dieser Längenausgleich kann manuell oder zweckmäßiger auch motorisch betätigt werden und ein Stellelement enthalten, das nach einer entsprechenden Ansteuerung eine Lagekorrektur der zugehörigen Arbeitsspindel mit dem eingespannten Werkzeug erlaubt.

Die im einzelnen erläuterte Aufspanneinrichtung mit den mehreren Wendespannern kann außerdem durch einen starren oder auch z.B. motorisch angetriebenen Rundtisch oder dgl. ersetzt werden.

Schließlich kann bei einer Variante der in Fig. 5 dargestellten Ausführung der Querträger 4 horizontal an einer oberen und einer unteren horizontalen stirnseitigen Führungsschiene 73, 74 verfahrbar sein, wobei die weiteren Bauteile wie in Fig. 5 gezeigt ausgebildet sind - entsprechend einer 90°-Verdrehung dieser Fig. 5.

## Patentansprüche

1. Werkzeugmaschine zur spanenden Bearbeitung von Werkstükken bestehend aus
- einem Maschinenständer (1) mit mehreren in einer ersten Koordinatenachse motorisch verfahrbaren Werkzeugschlitten (13, 14),
- einer Bearbeitungseinheit (26) mit mindestens einer Arbeitsspindel (29, 30; 76, 77),
- einem Koppelmechanismus mit mindestens zwei formsteifen Schwenkarmen (31, 32), die einerseits an einem Werkzeugschlitten (13, 14) und andererseits an der Bearbeitungseinheit (26) angelenkt sind,
- einer Werkstückträger-Einheit (10) für die Aufnahme der zu bearbeitenden Werkstücke,
**dadurch gekennzeichnet, daß**
- am Maschinenständer (1) ein als formsteife Rahmenkonstruktion ausgebildeter Querträger (4) in einer zweiten Koordinatenachse motorisch verfahrbar angeordnet ist, an dessen parallelen Tragholmen (17, 18) die Werkzeugschlitten (13, 14) geführt sind, und
- die Bearbeitungseinheit (26) und der Koppelmechänismus mit den Schwenkarmen (31, 32) in dem von den Tragholmen (17, 18) und den Seitenholmen (15, 16) des Querträgers (4) umgrenzten Innenraum des Querträgers (4) angeordnet sind.

2. Werkzeugmaschine nach Anspruch 1, **dadurch gekennzeichnet, daß** der Querträger (4) auf zwei Seitenteilen (2, 3) des Maschinenständers (1) horizontal verfahrbar geführt ist.

3. Werkzeugmaschine nach Anspruch 1, **dadurch gekennzeichnet, daß** der Querträger (4) an einer Front- oder Seitenwand (75) des Maschinenständers (1) vertikal oder horizontal verfahrbar geführt ist.

4. Werkzeugmaschine nach einem der Ansprüche 1 bis 3, **dadurch gekennzeichnet, daß** zwei Schwenkarme (31, 32) mit ihren einen Enden am Boden je eines Werkzeugschlittens (13, 14) und mit ihren anderen Enden an gegenüberliegenden Seiten der Bearbeitungseinheit (26) angelenkt sind und ein zusätzlicher Schwenkarm (33) die Bearbeitungseinheit (26) mit einem der Querschlitten (13, 14) gelenkig verbindet.

5. Werkzeugmaschine nach Anspruch 4, **dadurch gekennzeichnet, daß** zumindest der zusätzliche Schwenkarm (33) längenveränderlich ist.

6. Werkzeugmaschine nach Anspruch 5, **dadurch gekennzeichnet, daß** der längenveränderliche Schwenkarm (33) ein Teleskoparm mit gegeneinander verschiebbaren inneren und äußeren Armteilen (44, 45) ist.

7. Werkzeugmaschine nach Anspruch 4, **dadurch gekennzeichnet, daß** mindestens einer der beiden Werkzeugschlitten (13, 14) ein auf/an dem Querträger (4) horizontal verschiebbares erstes Schlittenteil (50) und ein auf diesem über Führungsschienen (52) verschiebbar geführtes zweites Schlittenteil (51) enthält, an dem der zusätzliche Schwenkarm (33) angelenkt ist.

8. Werkzeugmaschine nach einem der vorhergehenden Ansprüche, **dadurch gekennzeichnet, daß** die Werkzeugschlitten (13, 14) über jeweils einen Linearantrieb (53, 57, 58) angetrieben sind.

9. Werkzeugmaschine nach einem der vorhergehenden Ansprüche, **dadurch gekennzeichnet, daß** die Bearbeitungseinheit (26) zwei oder mehrere Arbeitsspindeln (29, 30) enthält.

10. Werkzeugmaschine nach Anspruch 9, **dadurch gekennzeichnet, daß** mindestens eine der Arbeitsspindeln (29, 30) mit einem Längenausgleich für das jeweils eingespannte Werkzeug versehen ist.

11. Werkzeugmaschine nach einem der vorhergehenden Ansprüche, **dadurch gekennzeichnet, daß** die beiden Seitenteile (2, 3) des Maschinenständers (1) durch eine Querwand (7) mit etwa halbrunder Stirnseite verbunden sind, und daß in dem so gebildeten Freiraum eine die Seitenteile (2, 3) ebenfalls miteinander verbindende Basis (9) vorgesehen ist, die als Spänesammler dient und auf der eine Werkstückträger-Einheit (10) angeordnet ist.

12. Werkzeugmaschine nach Anspruch 11, **dadurch gekennzeichnet, daß** die Werkstückträger-Einheit (10) eine um eine Vertikalachse motorisch verdrehbare Tragsäule (61) enthält, an der mehrere in Umfangsrichtung gleichbeabstandete Spannklötze (65) als Werkstück-Halter um deren horizontale Mittelachse drehbar angeordnet sind.

13. Werkzeugmaschine nach Anspruch 11, **dadurch gekennzeichnet, daß** die Werkstückträger-Einheit (10) ein starrer oder ein um eine Vertikalachse motorisch verdrehbarer Rundtisch ist.

14. Werkzeugmaschine nach einem der Ansprüche 11 bis 13, **dadurch gekennzeichnet, daß** hinter der rückseitigen Querwand (7) ein Werkzeugspeicher (69) vorgesehen ist und daß der obere Teil der Querwand (7) eine Ausnehmung (68) enthält, die von der Bearbeitungseinheit (26) zum Werkzeugwechsel durchfahren wird.

## Claims

1. Machine tool for machining work pieces, consisting of
- a machine tool table (1) having several tool slides (13, 14) which can be moved in a motorised manner in a first co-ordinate axis,
- a machining unit (26) having at least one work spindle (29, 30; 76, 77),
- a coupling mechanism having at least two dimensionally stable pivot arms (31, 32) which are articulated on the one hand on a tool slide (13, 14) and on the other hand on the machining unit (26),
- a work piece bearing unit (10) for receiving the work pieces to be machined,
**characterised in that**
- a transverse support (4), which is formed as a dimensionally stable frame construction, is disposed on the machine tool table (1) so as to be able to be moved in a motorised manner in a second co-ordinate axis, the tool slides (13, 14) being guided on the parallel support spars (17, 18) of the transverse support, and
- the machining unit (26) and the coupling mechanism having the pivot arms (31, 32) are disposed in the interior of the transverse support (4) defined by the support spars (17, 18) and the lateral spars (15, 16) of the transverse support (4).

2. Machine tool as claimed in Claim 1, **characterised in that** the transverse support (4) is guided on two lateral parts (2, 3) of the machine tool table (1) so as to be able to be horizontally moved.

3. Machine tool as claimed in Claim 1, **characterised in that** the transverse support (4) is guided on a front or lateral wall (75) of the machine tool table (1) so as to be able to be vertically or horizontally moved.

4. Machine tool as claimed in any one of Claims 1 to 3, **characterised in that** two pivot arms (31, 32) are articulated with their one end on the base of a respective tool slide (13, 14) and their other ends on opposite sides of the machining unit (26) and the machining unit (26) is connected in an articulated manner with one of the transverse slides (13, 14) by means of an additional pivot arm (33).

5. Machine tool as claimed in Claim 4, **characterised in that** at least the additional pivot arm (33) can be altered in terms of its length.

6. Machine tool as claimed in Claim 5, **characterised in that** the pivot arm (33) which can be altered in terms of its length is a telescopic arm having inner and outer arm parts (44, 45) which can be displaced with respect to each other.

7. Machine tool as claimed in Claim 4, **characterised in that** at least one of the two tool slides (13, 14) contains a first slide part (50) which can be horizontally displaced on the transverse support (4) and a second slide part (51) which is guided on the first slide part via guide rails (52) so as to be able to be displaced, the additional pivot arm (33) being articulated on this second slide part.

8. Machine tool as claimed in any one of the preceding Claims, **characterised in that** the tool slides (13, 14) are driven in each case by a linear drive (53, 57, 58).

9. Machine tool as claimed in any one of the preceding Claims, **characterised in that** the machining unit (26) contains two or several work spindles (29, 30).

10. Machine tool as claimed in Claim 9, **characterised in that** at least one of the work spindles (29, 30) is provided with a length compensation for the work piece which is clamped in each case.

11. Machine tool as claimed in any one of the preceding Claims, **characterised in that** the two lateral parts (2, 3) of the machine tool table (1) are connected by means of a transverse wall (7) having approximately semicircular end sides, and **in that** a base (9) is provided in the thus formed clearance space, which base likewise connects the lateral parts (2, 3) to each other, serves as the chip collector and has a work piece bearing unit (10) disposed thereon.

12. Machine tool as claimed in Claim 11, **characterised in that** the work piece bearing unit (10) contains a support column (61) which can be rotated in a motorised manner about a vertical axis and on which several clamping blocks (65), which are equally spaced apart in the peripheral direction, are disposed as work piece holders so as to be able to rotate about their horizontal central axes.

13. Machine tool as claimed in Claim 11, **characterised in that** the work piece bearing unit (10) is a fixed circular table or is a circular table which can rotate about a vertical axis in a motorised manner.

14. Machine tool as claimed in any one of Claims 11 to 13, **characterised in that** a work piece storing device (69) is provided behind the rear transverse wall (7), and **in that** the upper part of the transverse wall (7) contains a recess (68), through which the machining unit (26) passes for the purpose of changing work pieces.

## Revendications

1. Machine-outil pour l'usinage par enlèvement de copeaux de pièces à usiner, se composant
- d'un bâti de machine (1) comportant plusieurs coulisseaux porte-outil (13, 14) pouvant être déplacés de manière motorisée selon un premier axe des coordonnées,
- d'une unité d'usinage (26) avec au moins un arbre moteur (29, 30 ; 76, 77),
- d'un mécanisme de couplage avec au moins deux bras pivotants à stabilité propre (31, 32) qui sont articulés par des charnières d'un côté à un coulisseau porte-outil (13, 14) et d'un autre côté à l'unité d'usinage (26),
- d'une unité porte-pièce (10) pour la réception des pièces à usiner, **caractérisée en ce qu'**une traverse (4) réalisée comme faisant partie du bâti mais ayant une stabilité propre est disposée sur le bâti de la machine (1) et peut être déplacée de manière motorisée selon un second axe des coordonnées, traverse aux longerons porteurs parallèles (17, 18) à partir de laquelle sont guidés des coulisseaux porte-outil (13, 14), et **en ce que** l'unité d'usinage (26) et le mécanisme de couplage avec les bras pivotants (31, 32) sont disposés dans l'espace intérieur de la traverse (4), espace entouré des longerons porteurs (17, 18) et des longerons latéraux (15, 16).

2. Machine-outil selon la revendication 1, **caractérisée en ce que** la traverse (4) est guidée de manière mobile horizontalement sur deux parties latérales (2, 3) du bâti de machine (1).

3. Machine-outil selon la revendication 1, **caractérisée en ce que** la traverse (4) est guidée de manière mobile verticalement ou horizontalement à une paroi avant ou latérale (75) du bâti de machine (1).

4. Machine-outil selon l'une des revendications 1 à 3, **caractérisée en ce que** deux bras pivotants (31, 32) sont articulés par des charnières avec l'une de leur extrémité fixée à chaque coulisseau porte-outil (13, 14) et avec leur autre extrémité aux côtés de l'unité d'usinage (26) situés en face, et **en ce qu'**un bras pivotant supplémentaire (33) relie de manière articulée l'unité d'usinage (26) à l'un des coulisseaux transversaux (13, 14).

5. Machine-outil selon la revendication 4, **caractérisée en ce qu'**au moins l'arbre pivotant supplémentaire (33) est variable longitudinalement.

6. Machine-outil selon la revendication 5, **caractérisée en ce que** le bras pivotant variable en longueur (33) est un bras télescopique avec des sections de bras (44, 45) intérieures et extérieures pouvant se déplacer les unes contres les autres.

7. Machine-outil selon la revendication 4, **caractérisée en ce qu'**au moins un des deux coulisseaux porte-outil (13, 14) comprend une première partie de coulisseau (50) mobile horizontalement sur/à la traverse (4) et une seconde partie de coulisseau (51) guidé de manière mobile sur celle-ci par le biais de glissières de guidage (52), seconde partie du coulisseau à laquelle le bras pivotant supplémentaire (33) est articulé par des charnières.

8. Machine-outil selon l'une des revendications précédentes, **caractérisée en ce que** les coulisseaux porte-outil (13, 14) sont respectivement entraînés par une commande linéaire (53, 57, 58).

9. Machine-outil selon l'une des revendications précédentes, **caractérisée en ce que** l'unité d'usinage (26) comprend deux ou plusieurs arbres moteurs (29, 30).

10. Machine-outil selon la revendication 9, **caractérisée en ce qu'**au moins un des arbres moteurs (29, 30) est pourvu d'un équilibrage en longueur pour chaque pièce serrée.

11. Machine-outil selon l'une des revendications précédentes, **caractérisée en ce que** les deux parties latérales (2, 3) du bâti de machine (1) sont reliées par une paroi transversale (7) à un côté frontal presque demi-cercle, et **en ce qu'**une base (9) reliant également les parties latérales (2, 3) entre elles est prévue dans l'espace libre ainsi formé, base qui sert de collecteur de copeaux et qui est disposée sur l'unité porte-pièce (10).

12. Machine-outil selon la revendication 11, **caractérisée en ce que** l'unité porte-pièce (10) comporte une colonne porteuse (61) rotative de manière motorisée autour d'un axe vertical, colonne à laquelle plusieurs blocs de serrage (65) situés à la même distance à la périphérie sont disposés comme supports de pièce rotatifs autour de leur axe médian horizontal.

13. Machine-outil selon la revendication 11, **caractérisée en ce que** l'unité porte-pièce (10) est une table circulaire rigide ou rotative de manière motorisée autour d'un axe vertical.

14. Machine-outil selon l'une des revendications 11 à 13, **caractérisée en ce qu'**un entrepôt à outil (69) est prévu derrière la paroi transversale face arrière (7), et **en ce que** la partie supérieure de la paroi transversale (7) comprend une ouverture (68) traversée par l'unité d'usinage (26) pour changer l'outil.
